# EUROPEAN PATENT SPECIFICATION

(11) **EP 3 401 175 B1**
(45) Date of publication and mention of the grant of the patent: **25.12.2019**
(21) Application number: 18171686.1
(22) Date of filing: 10.05.2018
(51) Int. Cl.: B60T 11/10

(54) **DEVICE FOR CONTROLLING THE BRAKING OF A TRAILER**
GERÄT ZUR STEUERUNG DER BREMSE EINES ANHÄNGERS
ENGIN POUR LE RÉGLAGE DES FREINS D'UN REMORQUE

(30) Priority: 12.05.2017 IT 201700051957
(43) Date of publication of application: 14.11.2018
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 1 800 983
- EP-A1- 3 103 691
- EP-A2- 1 036 718
- US-A1- 2007 102 996

## Description

The present invention relates to a device for controlling the braking of a trailer.

It is known that in the case of a trailer towed by a prime mover, their braking systems are operationally connected in such a way that the braking of the prime mover by the operator also causes the braking of the towed trailer.

The braking system of the trailer is therefore driven by the braking system of the prime mover in order to synchronize the braking forces acting on these. Consequently, when the operator operates the brake pedal of the prime mover, he/she intervenes on the wheels of the prime mover and, by means of a braking valve (called brake-trailer valve), also on the braking system of the trailer.

As is known, to date, towing vehicles are connected to their trailers by a connection device comprising a pair of male couplings adapted to insert themselves inside a pair of relative female couplings associated with the trailer.

In particular, the female couplings can be connected to a control line adapted to feed the braking system of the trailer and to an additional line adapted to deactivate the automatic and/or parking brake of the trailer itself respectively. Under emergency situations, the additional line must be suitably connected to a discharge tank in order to allow the activation of the automatic and/or parking brake of the trailer and, therefore, the braking of same.

Such connection device therefore makes it possible to place in communication the braking system of the towing vehicle with that of the trailer in such a way that the braking of the towing vehicle operated by the operator also causes the braking of the towed trailer.

The devices for controlling the braking of a trailer of known type generally comprise a main line and a secondary line connectable to a respective source of a work fluid, a discharge line of the work fluid, a first line connectable to the braking system of the trailer (by means of the above-mentioned control line) and a second line connectable to the automatic and/or parking brake of the trailer (by means of the above-mentioned additional line).

Between the main line and the first line are generally placed first valve means, which can be actuated to place the first line in communication with the main line or with the discharge line, and between the secondary line and the second line are placed second valve means, which can be actuated to place the second line in communication with the secondary line or with the discharge line. One example belonging to the state of the art is disclosed in document US 2007/102996 A1.

It may happen that the towing vehicle is provided with a single supply source of the pressurized work fluid, such as a positive displacement pump.

In this case, it may happen that the pump with which the towing vehicle is equipped, even though it has enough flow rate to supply both the first line and the second line, does not have enough pressure to allow the deactivation of the automatic and/or parking brake of the trailer.

As can be easily understood, this can lead to considerable discomfort since the failure to deactivate the automatic and/or parking brake of the trailer prevents the trailer from moving correctly and, therefore, the corresponding towing vehicle.

The main aim of the present invention is to provide a device for controlling the braking of a trailer which allows, with a single supply source of a pressurized fluid, supplying both the first line and the second line at the pressure necessary to feed the respective user points, i.e. for the activation of the trailer's service braking and for the deactivation of the automatic and/or parking brake of the trailer itself.

Within this aim, one object of the present invention is to provide a device that allows pressure to be maintained along the second line within a predefined range of values.

Another object of the present invention is to provide a device for controlling the braking of a trailer which allows overcoming the aforementioned drawbacks of the prior art within the scope of a simple, rational, easy, efficient to use and cost-effective solution.

The aforementioned objects are achieved by the present device for controlling the braking of a trailer, according to claim 1.

Other characteristics and advantages of the present invention will become more evident from the description of a preferred, but not exclusive, embodiment of a device for controlling the braking of a trailer, illustrated by way of an indicative, but non-limiting example, in the attached drawings in which:

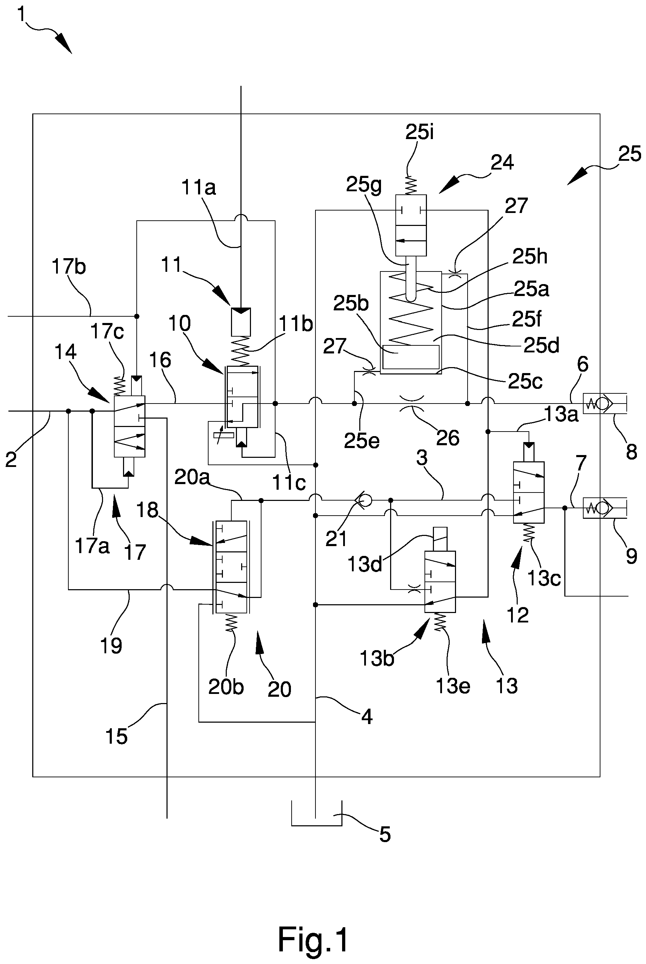

Figure 1 is the hydraulic diagram of a device for controlling the braking of a trailer according to the invention.

With particular reference to these illustrations, reference numeral 1 globally indicates a device for controlling the braking of a trailer.

The device 1 comprises at least one main line 2 connectable to a source of a work fluid at a first pressure, e.g. of the type of a positive displacement pump, at least one secondary line 3 separated from the main line 2, at least one discharge line 4 of the work fluid connectable to a discharge tank 5, at least one first line 6 connectable to the braking system of the trailer and at least one second line 7 connectable to the automatic and/or parking brake of the trailer. More specifically, the first line 6 is connected to a first male coupling 8 of the towing vehicle, and the second line 7 is connected to a second male coupling 9 of the towing vehicle. The first and the second male couplings 8 and 9 are connectable to respective female couplings (not shown in the illustrations), in turn connectable to the trailer, so as to place the first line 6 in communication with the control line of the trailer, to convey the work fluid to the service braking system of the trailer, and the second line 7 with the additional line of the trailer, to convey the work fluid to the control device of the parking and/or automatic brake of the trailer itself for its deactivation.

The device 1 then comprises first valve means 10 operable between a home position, in which the first line 6 is placed in communication with the discharge line 4, and at least one braking position, in which the first line 6 is placed in communication with the main line 2, and first piloting means 11 of the first valve means 10. The first piloting means 11 comprise at least a first piloting channel 11a connectable to the braking system of a towing vehicle and actuating on the first valve means 10 to displace them from the home position to the braking position. In the embodiment shown in the illustrations, the first piloting means 11 also comprise first elastic means 11b, placed between the first valve means 10 and the first piloting channel 11a, and a counteracting channel 11c communicating with the first line 6 and operating on the first valve means 10 from the opposite side with respect to the first piloting channel 11a.

The device 1 also comprises second valve means 12 operable between a normal operating position, in which the second line 7 is placed in communication with the secondary line 3, and an emergency position, in which the second line 7 is placed in communication with the discharge line 4.

Conveniently, second piloting means 13 of the second valve means 12 are provided. The second piloting means 13 comprise at least a second piloting channel 13a, adapted to interact with the second valve means 12 to displace them from the emergency position to the normal operating position, and at least one piloting valve 13b which can be commanded between an inactive position, in which it places the second piloting channel 13a in communication with the discharge line 4, and an active position, in which it places the second piloting channel 13a in communication with the secondary line 3.

The second piloting channel 13a operates on the second valve means 12 counteracting the second elastic means 13c.

The second valve means 12 are therefore adapted to displace from the emergency position to the normal operating position as a result of the displacement of the piloting valve 13b from the inactive position to the active position, this causing a corresponding increase in pressure along the second piloting channel 13a.

In turn the piloting valve 13b is commanded by a solenoid valve 13d which counteracts further elastic means 13e which are adapted to keep the piloting valve itself in the inactive position until the solenoid valve 13d is commanded.

According to the invention, the device 1 comprises at least one priority valve 14 interposed between the main line 2 and the first valve means 10 and operable between at least a first priority position, in which it places the main line 2 in communication with the first valve means 10 and at least a second priority position, in which it places the main line 2 in communication with the first valve means 10 and with at least one service line 15 connectable to at least a further user point.

More in detail, between the priority valve 14 and the first valve means 10 is interposed at least one intermediate line 16 which is adapted to connect the main line 2 to the first valve means in the first and in the second priority position.

Advantageously, the device 1 comprises third piloting means 17 of the priority valve 14.

More particularly, the third piloting means 17 comprise at least a third piloting channel 17a communicating with the main line 2 and operating on the priority valve itself to displace it from the first priority position to the second priority position, and at least one load sensing channel 17b communicating with the first line 6 and operating on the priority valve 14 on the opposite side of the third piloting channel 17a.

The third piloting means 17 also comprise third elastic means 17c, which operate on the priority valve 14 in the same direction as the load sensing channel 17b.

Preferably, the third elastic means 17c, e.g. of the type of a spring, are pre-charged at a first calibration value. It follows, therefore, that the priority valve 14 displaces from the first priority position to the second priority position when the force applied by the third piloting channel 17a on the priority valve itself is greater than the sum of the force applied by the load sensing channel 17b and by the third elastic means 17c.

Still according to the invention, the device 1 comprises at least one pressure reducing valve 18 interposed between the main line 2 and the second valve means 12. The pressure reducing valve 18 is operable between at least a feeding position, in which the main line 2 is placed in communication with the secondary line 3, and at least a discharge position, in which the secondary line 3 is placed in communication with the discharge line 4.

More particularly, in the unloading position, the secondary line 3 is isolated from the main line 2.

Suitably, the device 1 comprises a connecting line 19 interposed between the main line 2 and the pressure reducing valve 18. The connecting line 19 is therefore communicating with the secondary line 3 when the pressure reducing valve 18 is in the feeding position and closed when the pressure reducing valve 18 is in the discharge position.

In the embodiment shown in Figure 1, the pressure reducing valve 18 also has an intermediate position between the feeding position and the discharge position, in which the main line 2, the secondary line 3 and the discharge line 4 are mutually isolated.

The device 1 then comprises fourth piloting means 20 of the pressure reducing valve 18 comprising at least a fourth piloting channel 20a communicating with the secondary line 3 and operating on the pressure reducing valve 18 to displace it from the feeding position to the discharge position, and at least fourth elastic means 20b acting on the opposite side of the fourth piloting channel 20a.

Suitably, the fourth elastic means 20b, e.g. of the type of a spring, are pre-charged at a second calibration value.

Preferably, the second calibration value of the fourth elastic means 20b is greater than the first calibration value of the third elastic means 17c.

By suitably calibrating the third elastic means 17c, it results that the priority valve 14 displaces to the second priority position, thus sending a part of the work fluid along the service line 15, upon reaching the minimum pressure required along the second line 7 for the deactivation of the automatic and/or parking brake of the trailer. Therefore, until this pressure value is reached along the main line 2, the priority valve 14 remains in the first priority position, whereby the work fluid is sent along the intermediate line 16 and along the connecting line 19.

Similarly, by suitably calibrating the fourth elastic means 20b, it results that the pressure reducing valve 18 displaces to the intermediate position, in which the connecting line 19 is closed, upon reaching the corresponding pressure along the fourth piloting channel 20a and subsequently displaces to the unloading position following the exceeding of the maximum acceptable pressure value along the second line 7.

For example, by calibrating the third elastic means 17c at a value just above 15 bar and the fourth elastic means 20b at a value close to 35 bar, the pressure along the second line 7 remains within this range, as required by the current regulation in force.

Advantageously, the device 1 comprises at least a first one-way valve 21 arranged along the secondary line 3 and interposed between the second valve means 12 and the pressure reducing valve 18, which is adapted to prevent the work fluid from flowing along the secondary line 3, from the second line 7 to the main line 2. The first one-way valve 21 is therefore adapted to prevent that a sudden drop in pressure along the first line 6 recalls work fluid from the second line 7 when the pressure reducing valve 18 is in the feeding position. This would then cause the unwanted activation of the automatic and/or parking brake of the trailer.

The device 1 also comprises emergency valve means 24 interposed between the second piloting channel 13a and the discharge line 4, which are activatable between an inactive position, in which they isolate the second piloting channel 13a from the discharge line 4, and an active position, in which they place the second piloting channel 13a in communication with the discharge line 4. Emergency piloting means 25 are also provided which are connected in a fluid operated manner to the first line 6.

In the embodiment shown in the illustrations, the emergency piloting means 25 comprise at least a fluid operated cylinder 25a inside which is housed sliding at least a thrust element 25b on which operate, from opposite sides, a first chamber 25c and a second chamber 25d communicating with the first line 6. More in particular, along the first line 6 is arranged a bottleneck 26 and the emergency piloting means 25 comprise at least a first supply channel 25e for supplying the first chamber 25c and at least a second supply channel 25f for supplying the second chamber 25d, where the first and second channels 25e and 25f are placed in communication with the first line 6 upstream and downstream of the bottleneck 26 respectively. The terms "upstream" and "downstream" are used here to refer to the direction of forward movement of the work fluid along the first line 6, i.e. from the supply source towards the braking system of the trailer. Along the first and the second channels 25e and 25f are preferably arranged relative bottlenecks 27.

The emergency piloting means 25 then comprise at least one operating element 25g, operatively connected to the emergency valve means 24 to push them from the inactive position to the active position, which is adapted to interact with the thrust element 25b following the pressure increase in the first chamber 25c with respect to the second chamber 25d. The thrust element 25b then moves towards the operating element 25g following the occurrence of a pressure difference between the first and the second channel 25e and 25f, in favor of the first, e.g., due to a leak along the first line 6. Suitably, inside the second chamber 25d elastic means 25h are housed adapted to counteract the displacement of the thrust element 25b towards the operating element 25g.

The emergency piloting means 25 also comprise fifth elastic means 25i which operate on the emergency valve means 24 counteracting the operating element 25g.

The emergency piloting means 25 are therefore adapted to allow the operation of the automatic and/or parking brake of the trailer under emergency conditions, e.g., following a leak along the control line of the trailer, including in the case of the piloting valve 13b being in the active position.

The operation of the present invention is as follows.

When the towing vehicle is switched on, the first valve means 10 are in home position, so the pressure along the first line 6 is substantially equal to zero.

Initially, the priority valve 14 and the pressure reducing valve 18 are located in the first priority position and in the feeding position respectively, whereby the work fluid present in the main line 2 flows along the intermediate line 16, passing through the priority valve 14, and along the secondary line 3, passing through the connecting line 19 and the pressure reducing valve 18.

When the service braking of the towing vehicle is applied, the pressure along the first piloting channel 11a increases accordingly, thus causing the first valve means 10 to move from the home position towards the braking position.

After the first valve means 10 have reached the braking position, the work fluid coming from the main line 2 flows along the first line 6 and consequently the service braking of the trailer is activated.

This operating condition also involves an increase in pressure along the counteracting channel 11c, so the first valve means 10 are in an unstable balancing position in which the passage section of the work fluid from the main line 2 towards the first line 6 increases or decreases depending on the ratio between the forces acting on the first valve means themselves, and along the load sensing channel 19b.

When the solenoid valve 13d is controlled, the piloting valve 13b displaces from the inactive position to the active position thus placing the second line 7 in communication with the secondary line 3.

Due to the pressure present along the secondary line 3, the second valve means 12 displace from the emergency position to the normal operating position, thus allowing the work fluid present in the secondary line itself and coming from the main line 2 to slide along the second line 7 and thus release the automatic and/or parking brake of the trailer.

The instant when the service braking of the trailer has been activated along the first line 6, a back pressure is generated which leads to an increase in pressure along the main line 2. Therefore, the pressure difference between the main line 2 and the first line 6 increases to such an extent that the force applied by the third piloting channel 17a on the priority valve 14 exceeds the calibration value of the third elastic means 17c, the priority valve itself displaces to the second priority position, so as to divert a part of the flow of the work fluid along the service line 15.

The priority valve 14 thus allows preventing the flow of the work fluid from being diverted to the service line 15 when the pressure along the main line 2 is lower than a predefined value.

The pressure reducing valve 18, on the other hand, remains in the feeding position until the pressure along the secondary line 3 reaches the calibration value of the fourth elastic means 20b, exactly when the valve displaces to the discharge position, passing through the intermediate position, so as to place the secondary line in communication with the discharge line 4 and therefore prevent the pressure along it from rising above a threshold value.

It has in practice been found that the described invention achieves the intended objects and in particular the fact is underlined that the device which the present invention relates to, thanks to the presence of the priority valve and of the pressure reducing valve, allows suitably feeding both the first line and the second line, thus maintaining the pressure along the latter within a predefined range of values.

In particular, by appropriately calibrating the values of the third and of the fourth elastic means operating on the priority valve and on the pressure reducing valve respectively, the minimum and maximum pressure value along the second line are adjusted accordingly.

## Claims

1. Device (1) for controlling the braking of a trailer, comprising:
- at least one main line (2) connectable to a source of a work fluid at a first pressure;
- at least one secondary line (3) separated from said main line (2);
- at least one discharge line (4) of the work fluid;
- at least one first line (6) connectable to the braking system of the trailer;
- at least one second line (7) connectable to the automatic and/or parking brake of the trailer;
- first valve means (10) operable between a home position, in which said first line (6) is placed in communication with said discharge line (4), and a braking position, in which said first line (6) is placed in communication with said main line (2);
- first piloting means (11) comprising at least a first piloting channel (11a) connectable to the braking system of a towing vehicle and actuating on the first valve means (10) to displace them from the home position to the braking position;
- second valve means (12) operable between a normal operating position, in which said second line (7) is placed in communication with said secondary line (3), and an emergency position, in which said second line (7) is placed in communication with said discharge line (4);
**characterized by** the fact that it comprises at least one priority valve (14) interposed between said main line (2) and said first valve means (10), operable between a first priority position, in which it places said main line (2) in communication with said first valve means (10) and at least a second priority position, in which it places said main line (2) in communication with said first valve means (10) and with at least one service line (15) connectable to a further user point, and by the fact that it comprises at least one pressure reducing valve (18) interposed between said main line (2) and said second valve means (12), said pressure reducing valve (18) being operable between at least one feeding position, in which said main line (2) is placed in communication with said secondary line (3), and at least one discharge position, in which said secondary line (3) is placed in communication with said discharge line (4).

2. Device (1) according to claim 1, **characterized by** the fact that said first piloting means (11) comprise at least first elastic means (11b), interposed between said first piloting channel (11a) and said first valve means (10), and at least one counteracting channel (11c), communicating with said first line (6) and acting on the first valve means themselves on the opposite side of said first piloting channel (11a).

3. Device (1) according to claim 1 or 2, **characterized by** the fact that it comprises second piloting means (13) comprising a second piloting channel (13a) acting on said second valve means (12) to displace them from the emergency position to the normal operating position, and at least one piloting valve (13b) which can be commanded between an inactive position, in which it places said second piloting channel (13a) in communication with said discharge line (4), and at least an active position, in which it places said second piloting channel (13a) in communication with said secondary line (3), said second valve means (12) displacing from the emergency position to the normal operating position as a result of the displacement of said piloting valve (13b) from the inactive position to the active position.

4. Device (1) according to claim 3, **characterized by** the fact that said second piloting means (13) comprise at least second elastic means (13c) acting on said second valve means (12) on the opposite side of said second piloting channel (13a).

5. Device (1) according to one or more of the preceding claims, **characterized by** the fact that it comprises third piloting means (17) of said priority valve (14) comprising at least a third piloting channel (17a) communicating with said main line (2) and acting on the priority valve itself to displace it from the first priority position to the second priority position, and at least one load sensing channel (17b) communicating with said first line (6) and acting on said priority valve (14) on the opposite side of said third piloting channel (17a).

6. Device (1) according to claim 5, **characterized by** the fact that said third piloting means (17) comprise at least third elastic means (17c) acting on said priority valve (14) in the same direction as said load sensing channel (17b).

7. Device (1) according to claim 6, **characterized by** the fact that said third elastic means (17c) are pre-charged at a first calibration value.

8. Device (1) according to one or more of the preceding claims, **characterized by** the fact that it comprises fourth piloting means (20) of said pressure reducing valve (18) comprising at least a fourth piloting channel (20a) communicating with said secondary line (3) and acting on said pressure reducing valve (18) to displace it from the feeding position to the discharge position, and at least fourth elastic means (20b) acting on the opposite side of said fourth piloting channel (20a).

9. Device (1) according to claim 8, **characterized by** the fact that said fourth elastic means (20b) are pre-charged at a second calibration value.

10. Device (1) according to claims 7 and 9, **characterized by** the fact that said second calibration value is higher than said first calibration value.

11. Device (1) according to one or more of the preceding claims, **characterized by** the fact that it comprises at least a first one-way valve (21) arranged along said secondary line (3) and interposed between said second valve means (12) and said pressure reducing valve (18), said first one-way valve (21) being adapted to prevent the flow of the work fluid from said second line (7) to said main line (2).

## Patentansprüche

1. Vorrichtung (1) zum Steuern der Bremsung eines Anhängers, umfassend:
- mindestens eine Hauptleitung (2), die bei einem ersten Druck mit einer Quelle eines Arbeitsfluids verbindbar ist;
- mindestens eine von der Hauptleitung (2) getrennte sekundäre Leitung (3);
- mindestens eine Abflussleitung (4) des Arbeitsfluids;
- mindestens eine erste Leitung (6), die mit dem Bremssystem des Anhängers verbindbar ist;
- mindestens eine zweite Leitung (7), die mit der automatischen und/oder Feststellbremse des Anhängers verbindbar ist;
- erste Ventilmittel (10), die zwischen einer Ausgangsposition, in der die erste Leitung (6) in Verbindung mit der Abflussleitung (4) angeordnet ist, und einer Bremsposition, in der die erste Leitung (6) in Verbindung mit der Hauptleitung (2) angeordnet ist, betreibbar sind;
- erste Steuermittel (11), die mindestens einen ersten Steuerkanal (11a) umfassen, der mit dem Bremssystem eines Zugfahrzeugs verbindbar ist und auf die ersten Ventilmittel (10) wirkt, um sie aus der Ausgangsposition in die Bremsposition zu verschieben;
- zweite Ventilmittel (12), die zwischen einer normalen Betriebsposition, in der die zweite Leitung (7) in Verbindung mit der sekundären Leitung (3) angeordnet ist, und einer Notfallposition, in der die zweite Leitung (7) in Verbindung mit der Abflussleitung (4) angeordnet ist, betreibbar sind;
**dadurch gekennzeichnet, dass** sie mindestens ein Prioritätsventil (14) umfasst, das zwischen der Hauptleitung (2) und den ersten Ventilmitteln (10) angeordnet ist und zwischen einer ersten Prioritätsposition, in der es die Hauptleitung (2) in Verbindung mit den ersten Ventilmitteln (10) bringt, und mindestens einer zweiten Prioritätsposition betrieben werden kann, in der es die Hauptleitung (2) in Verbindung mit den ersten Ventilmitteln (10) und mit mindestens einer mit einem weiteren Benutzerpunkt verbindbaren Versorgungsleitung (15) bringt, und dadurch, dass sie mindestens ein Druckminderungsventil (18) umfasst, das zwischen der Hauptleitung (2) und den zweiten Ventilmitteln (12) angeordnet ist, wobei das Druckminderungsventil (18) zwischen mindestens einer Zuführposition, in der die Hauptleitung (2) in Verbindung mit der sekundären Leitung (3) angeordnet ist, und mindestens einer Abflussposition, in der die sekundären Leitung (3) in Verbindung mit der Abflussleitung (4) angeordnet ist, betreibbar ist.

2. Vorrichtung (1) nach Anspruch 1, **dadurch gekennzeichnet, dass** die ersten Steuermittel (11) mindestens erste elastische Mittel (11b), die zwischen dem ersten Steuerkanal (11a) und den ersten Ventilmitteln (10) angeordnet sind, und mindestens einen gegenwirkenden Kanal (11c) umfassen, der mit der ersten Leitung (6) in Verbindung steht und auf die ersten Ventilmittel selbst auf der gegenüberliegenden Seite des ersten Steuerkanals (11a) wirken.

3. Vorrichtung (1) nach Anspruch 1 oder 2, **dadurch gekennzeichnet, dass** sie zweite Steuermittel (13) umfasst, die einen zweiten Steuerkanal (13a) umfassen, der auf die zweiten Ventilmittel (12) einwirkt, um sie aus der Notfallposition in die normale Betriebsposition zu verschieben, und mindestens ein Steuerventil (13b), das zwischen einer inaktiven Position, in der es den zweiten Steuerkanal (13a) in Verbindung mit der Abflussleitung (4) bringt, und mindestens einer aktiven Position gesteuert werden kann, in der es den zweiten Steuerkanal (13a) in Verbindung mit der sekundären Leitung (3) bringt, wobei sich die zweiten Ventilmittel (12) infolge der Verschiebung des Steuerventils (13b) von der inaktiven Position in die aktive Position aus der Notfallposition in die normale Betriebsposition bewegt.

4. Vorrichtung (1) nach Anspruch 3, **dadurch gekennzeichnet, dass** die zweiten Steuermittel (13) mindestens zweite elastische Mittel (I3c) umfassen, die auf die zweiten Ventilmittel (12) auf der gegenüberliegenden Seite des zweiten Steuerkanals (13a) wirkt.

5. Vorrichtung (1) gemäß einem oder mehreren der vorhergehenden Ansprüche, **dadurch gekennzeichnet, dass** sie dritte Steuermittel (17) des Prioritätsventils (14) umfasst, die mindestens einen dritten Steuerkanal (17a) umfassen, der mit der Hauptleitung (2) in Verbindung steht und auf das Prioritätsventil selbst einwirkt, um es von der ersten Prioritätsposition in die zweite Prioritätsposition zu verschieben, und mindestens einen Lasterfassungskanal (17b), der mit der ersten Leitung (6) in Verbindung steht und auf das Prioritätsventil (14) auf der gegenüberliegenden Seite des dritten Steuerkanals (17a) einwirkt.

6. Vorrichtung (1) nach Anspruch 5, **dadurch gekennzeichnet, dass** die dritten Steuermittel (17) mindestens dritte elastische Mittel (17c) umfasst, die auf das Prioritätsventil (14) in der gleichen Richtung wie der Lastaufnahmekanal (17b) wirken.

7. Vorrichtung (1) nach Anspruch 6, **dadurch gekennzeichnet, dass** die dritten elastischen Mittel (17c) bei einem ersten Kalibrierwert vorgeladen sind.

8. Vorrichtung (1) nach einem oder mehreren der vorhergehenden Ansprüche, **dadurch gekennzeichnet, dass** sie vierte Steuermittel (20) des Druckminderungsventils (18) umfasst, die mindestens einen vierten Steuerkanal (20a) umfassen, der mit der sekundären Leitung (3) in Verbindung steht und auf das Druckminderungsventil (18) wirkt, um es von der Zuführposition in die Abflussposition zu verschieben, und mindestens vierte elastische Mittel (20b), die auf der gegenüberliegenden Seite des vierten Steuerkanals (20a) wirken.

9. Vorrichtung (1) nach Anspruch 8, **dadurch gekennzeichnet, dass** die vierten elastischen Mittel (20b) bei einem zweiten Kalibrierwert vorgeladen sind.

10. Vorrichtung (1) nach den Ansprüchen 7 und 9, **dadurch gekennzeichnet, dass** der zweite Kalibrierwert höher ist als der erste Kalibrierwert.

11. Vorrichtung (1) nach einem oder mehreren der vorhergehenden Ansprüche, **dadurch gekennzeichnet, dass** sie mindestens ein erstes Einwegventil (21) umfasst, das entlang der sekundären Leitung (3) angeordnet und zwischen den zweiten Ventilmitteln (12) und dem Druckminderungsventil (18) angeordnet ist, wobei das erste Einwegventil (21) angepasst ist, um den Fluss des Arbeitsfluids von der zweiten Leitung (7) zu der Hauptleitung (2) zu verhindern.

## Revendications

1. Dispositif (1) pour contrôler le freinage d'une remorque, comprenant :
- au moins une conduite principale (2) pouvant être raccordée à une source d'un fluide de travail à une première pression ;
- au moins une conduite secondaire (3) séparée de ladite conduite principale (2) ;
- au moins une conduite d'évacuation (4) du fluide de travail ;
- au moins une première conduite (6) pouvant être raccordée au système de freinage de la remorque ;
- au moins une seconde conduite (7) pouvant être raccordée au frein automatique et/ou de stationnement de la remorque ;
- des premiers moyens de clapet (10) pouvant fonctionner entre une position initiale, dans laquelle ladite première conduite (6) est placée en communication avec ladite conduite d'évacuation (4), et une position de freinage, dans laquelle ladite première conduite (6) est placée en communication avec ladite conduite principale (2) ;
- des premiers moyens de pilotage (11) comprenant au moins un premier canal de pilotage (11a) pouvant être raccordé au système de freinage d'un véhicule de traction et agissant sur les premiers moyens de clapet (10) pour les déplacer de la position initiale à la position de freinage ;
- des seconds moyens de clapet (12) pouvant fonctionner entre une position de fonctionnement normal, dans laquelle ladite seconde conduite (7) est placée en communication avec ladite conduite secondaire (3), et une position d'urgence, dans laquelle ladite seconde conduite (7) est placée en communication avec ladite conduite d'évacuation (4) ;
**caractérisé par le fait qu'**il comprend au moins un clapet de priorité (14) interposé entre ladite conduite principale (2) et lesdits premiers moyens de clapet (10), pouvant fonctionner entre une première position de priorité, dans laquelle il place ladite conduite principale (2) en communication avec lesdits premiers moyens de clapet (10) et au moins une seconde position de priorité, dans laquelle il place ladite conduite principale (2) en communication avec lesdits premiers moyens de clapet (10) et avec au moins une conduite de service (15) pouvant être raccordée à un autre point utilisateur, et **par le fait qu'**il comprend au moins un clapet de réduction de pression (18) interposé entre ladite conduite principale (2) et lesdits seconds moyens de clapet (12), ledit clapet de réduction de pression (18) pouvant fonctionner entre au moins une position d'alimentation, dans laquelle ladite conduite principale (2) est placée en communication avec ladite conduite secondaire (3), et au moins une position d'évacuation, dans laquelle ladite conduite secondaire (3) est placée en communication avec ladite conduite d'évacuation (4).

2. Dispositif (1) selon la revendication 1, **caractérisé par le fait que** lesdits premiers moyens de pilotage (11) comprennent au moins des premiers moyens élastiques (11b), interposés entre ledit premier canal de pilotage (11a) et lesdits premiers moyens de clapet (10), et au moins un canal de contre-action (11c), communiquant avec ladite première conduite (6) et agissant sur les premiers moyens de clapet eux-mêmes sur le côté opposé dudit premier canal de pilotage (11a).

3. Dispositif (1) selon la revendication 1 ou 2, **caractérisé par le fait qu'**il comprend des deuxièmes moyens de pilotage (13) comprenant un deuxième canal de pilotage (13a) agissant sur lesdits seconds moyens de clapet (12) pour les déplacer de la position d'urgence à la position de fonctionnement normal, et au moins un clapet de pilotage (13b) qui peut être commandé entre une position inactive, dans laquelle il place ledit deuxième canal de pilotage (13a) en communication avec ladite conduite d'évacuation (4), et au moins une position active, dans laquelle il place ledit deuxième canal de pilotage (13a) en communication avec ladite conduite secondaire (3), lesdits seconds moyens de clapet (12) se déplaçant de la position d'urgence à la position de fonctionnement normal à la suite du déplacement dudit clapet de pilotage (13b) de la position inactive à la position active.

4. Dispositif (1) selon la revendication 3, **caractérisé par le fait que** lesdits deuxièmes moyens de pilotage (13) comprennent au moins des deuxièmes moyens élastiques (13c) agissant sur lesdits seconds moyens de clapet (12) sur le côté opposé dudit deuxième canal de pilotage (13a).

5. Dispositif (1) selon une ou plusieurs des revendications précédentes, **caractérisé par le fait qu'**il comprend des troisièmes moyens de pilotage (17) dudit clapet de priorité (14) comprenant au moins un troisième canal de pilotage (17a) communiquant avec ladite conduite principale (2) et agissant sur le clapet de priorité lui-même pour le déplacer de la première position de priorité à la seconde position de priorité, et au moins un canal de détection de charge (17b) communiquant avec ladite première conduite (6) et agissant sur ledit clapet de priorité (14) sur le côté opposé dudit troisième canal de pilotage (17a).

6. Dispositif (1) selon la revendication 5, **caractérisé par le fait que** lesdits troisièmes moyens de pilotage (17) comprennent au moins des troisièmes moyens élastiques (17c) agissant sur ledit clapet de priorité (14) dans la même direction que ledit canal de détection de charge (17b).

7. Dispositif (1) selon la revendication 6, **caractérisé par le fait que** lesdits troisièmes moyens élastiques (17c) sont pré-chargés à une première valeur d'étalonnage.

8. Dispositif (1) selon une ou plusieurs des revendications précédentes, **caractérisé par le fait qu'**il comprend des quatrièmes moyens de pilotage (20) dudit clapet de réduction de pression (18) comprenant au moins un quatrième canal de pilotage (20a) communiquant avec ladite conduite secondaire (3) et agissant sur ledit clapet de réduction de pression (18) pour le déplacer de la position d'alimentation à la position d'évacuation, et au moins des quatrièmes moyens élastiques (20b) agissant sur le côté opposé dudit quatrième canal de pilotage (20a).

9. Dispositif (1) selon la revendication 8, **caractérisé par le fait que** lesdits quatrièmes moyens élastiques (20b) sont pré-chargés à une seconde valeur d'étalonnage.

10. Dispositif (1) selon les revendications 7 et 9, **caractérisé par le fait que** ladite seconde valeur d'étalonnage est plus élevée que ladite première valeur d'étalonnage.

11. Dispositif (1) selon une ou plusieurs des revendications précédentes, **caractérisé par le fait qu'**il comprend au moins un premier clapet de non-retour (21) agencé le long de ladite conduite secondaire (3) et interposé entre lesdits seconds moyens de clapet (12) et ledit clapet de réduction de pression (18), ledit premier clapet de non-retour (21) étant adapté pour empêcher l'écoulement du fluide de travail de ladite seconde conduite (7) vers ladite conduite principale (2).
